Europäisches Patentamt

European Patent Office

Office européen des brevets

(11) Veröffentlichungsnummer: **0 351 715**
**A2**

## (12) EUROPÄISCHE PATENTANMELDUNG

(21) Anmeldenummer: **89112809.2**

(22) Anmeldetag: **13.07.89**

(51) Int. Cl.⁴: **B21J 15/04 , F16B 19/10**

(30) Priorität: **21.07.88 DE 3824817**

(43) Veröffentlichungstag der Anmeldung:
**24.01.90 Patentblatt 90/04**

(84) Benannte Vertragsstaaten:
**AT CH DE FR GB LI SE**

(71) Anmelder: **HILTI Aktiengesellschaft**

**FL-9494 Schaan(LI)**

(72) Erfinder: **Thurner, Elmar**
**Reichsstrasse 7a**
**A-6804 Feldkirch-Altenstadt(AT)**

(74) Vertreter: **Wildi, Roland**
**Hilti Aktiengesellschaft Patentabteilung**
**FL-9494 Schaan(LI)**

(54) Verfahren zum Verbinden dünner Bauteile und Befestigungselement hierzu.

(57) Das Verbinden von Bauteilen (7, 8) mittels Befestigungselementen aus Stauchhülse (1) und Zugdorn (2) erfolgt derart, dass das Befestigungselement mittels eines pulverkraftbetriebenen Setzgerätes durch die Bauteile (7, 8) hindurchgetrieben wird. Der Zugdorn (2) weist hierzu einen Kopf (6) auf, der eine für das Durchstanzen geeignete Form aufweist. Nach dem Hindurchstanzen wird die Stauchhülse (1) durch Zurückziehen des Zugdorns (2) an der Rückseite der Bauteile (7, 8) aufgeweitet.

## Verfahren zum Verbinden dünner Bauteile und Befestigungselement hierzu

Die Erfindung betrifft ein Verfahren und die Ausbildung von Befestigungselementen zum Verbinden dünner Bauteilen mittels eines solchen Befestigungselementes, bestehend aus einer Stauchhülse und einem diese durchragenden Zugdorn mit die Stauchhülse in Setzrichtung überragendem Kopf, wobei das Befestigungselement durch die Bauteile hindurchgetrieben und anschliessend die Stauchhülse durch Zurückziehen des Zugdorns an der Rückseite der Bauteile aufgeweitet wird.

Zur Verbindung dünner Bleche ist beispielsweise aus der DE-GM 8 419 302 ein blindnietartiges Befestigungselement mit Stauchhülse und Zugdorn bekannt. Der Setzvorgang erfolgt, indem die vom Zugdorn durchragte Stauchhülse in eine vorgefertigte Bohrung eingeführt wird. Anschliessend wird die Stauchhülse auf der Rückseite der Bleche durch Ziehen des Zugdorns entgegen der Setzrichtung zur Bildung eines Schliesskopfes gestaucht.

Bei diesem Setzvorgang erweist sich das gesonderte Erstellen der Bohrung mittels eines herkömmlichen Bohrwerkzeugs als zeitaufwendig, mühsam und zudem umständlich, da unterschiedliche Grössen des Nietes auch unterschiedlich dimensionierte Bohrwerkzeuge erfordern.

Für dieselbe Anwendung ist es aus der DE-PS 22 44 159 bekannt, einen selbstbohrenden Blindniet mit Stauchhülse und Zugdorn einzusetzen. Der setzrichtungsseitige Endabschnitt des Zugdorns ist zum Erstellen einer Bohrung zu einer Schneidplatte geformt. Der Bohrvorgang erweist sich aber ebenso als sehr zeitaufwendig und mühsam, zumal die Schneidplatte im Vergleich mit herkömmlichen Bohrwerkzeugen ein erheblich schlechteres Schneidvermögen besitzt.

Aus der US-PS 4 388 031 ist ein Befestigungselement mit Stauchhülse und Zugdorn zum Verbinden dünner Bauteile aus weichem Material, wie Gips, bekannt. Für das Verbinden solcher Bauteile aus weichem Material kann das Befestigungselement statt in eine vorgefertigte Bohrung direkt gesetzt werden, wobei der Kopf eine Ausnehmung zur Aufnahme der Stauchhülse schafft.

Der Erfindung liegt die Aufgabe zugrunde, für das Verbinden und Befestigen dünner, beispielsweise aus Blech bestehender Bauteile ein zeitsparendes, einfach durchführbares Verfahren und ein dazu geeignetes Befestigungselement zu schaffen.

Erfindungsgemäss wird die Aufgabe dadurch gelöst, dass das Hindurchtreiben des Befestigungselementes durch die Bauteile mittels eines pulverkraftbetriebenen Setzgerätes unter Hindurchstanzen des Kopfes der Befestigungselemente durch die Bauteile erfolgt.

Die von einem pulverkraftbetriebenen Setzgerät abgegebene Kraft wirkt schlagartig und mit ausreichend starker Intensität auf das Befestigungselement ein, um in einem Zuge ein rasches Hindurchtreiben des Befestigungselementes auch durch harte Bauteile unter Durchstanzen derselben zu erreichen. Der Kopf des Zugdornes führt dabei die Stanzarbeit aus. Die Pulverkraft des Setzgerätes kann beispielsweise von einem Kolben des Setzgerätes direkt auf den Zugdorn eingeleitet werden oder über die Stauchhülse zum Kopf gelangen. Das Weiten oder Stauchen der Spreizhülse erfolgt in herkömmlicher Weise. Möglich ist es, hierzu den Rückhub des Setzgerätes nach dem Stanzvorgang zu nutzen.

Der Kopf des zur Durchführung des Verfahrens vorgesehenen Befestigungselementes weist mit Vorzug eine konvex ausgebildete freie Stirnseite auf. Diese Form der Stirnseite führt zu einem Durchstossen der Bauteile, wobei bei Durchmessergleichheit zwischen dem Kopf des Zugdorns und dem an diesen anschliessenden Aussendurchmesser der Stauchhülse eine Klemmwirkung in der ausgestanzten Ausnehmung erreicht werden kann. Die Klemmwirkung erhöht die Haltekraft des Befestigungselementes in den Bauteilen.

Zur Erzielung eines geringen Setzwiderstandes bei gleichzeitig ausreichender Festigkeit des Befestigungselementes ist die freie Stirnseite vorzugsweise als ogivale Spitze ausgebildet. Diese Ausbildung eignet sich insbesondere auch für Bauteile grösserer Dicke.

Nach einer weiteren Ausführungsform kann der Kopf unter Bildung einer sich entlang dessen Umfangskontur erstreckenden Ringschneide eine plan ausgebildete freie Stirnseite aufweisen. Die Ringschneide gewährleistet einen geringen Setzwiderstand, indem das Material zur Schaffung einer Ausnehmung praktisch ohne radiales Verdrängen axial ausgestossen wird.

Eine weitere, ebenso einen geringen Setzwiderstand gewährleistende Ausführungsform kann darin bestehen, dass der Kopf unter Bildung einer sich entlang dessen Umfangskontur erstreckenden Ringschneide eine konkav ausgebildete freie Stirnseite aufweist.

Die konkav ausgebildete freie Stirnseite weist zweckmässig einen kalottenförmigen Boden auf. Der dadurch stufenlos ausgebildete Boden gewährleistet eine sich durch hohe Festigkeit auszeichnende Abstützung der Ringschneide.

Die grösste Tiefe des kalottenförmigen Bodens beträgt vorteilhaft das 0,1- bis 0,3-fache des Durchmessers des Kopfes. Auf diese Weise wird einerseits eine Ringschneide mit hoher Festigkeit erzielt und andererseits ein hohe Schneidgüte gewährleistender Querschnitt der Ringschneide geschaffen.

Die Umfangskontur des Kopfes ist vorzugsweise wenigstens teilweise entlang seiner axialen Länge zylindrisch ausgebildet. Die Stauchhülse weist zweckmässig eine dem Kopf entsprechende Umfangskontur auf. Geringer Materialaufwand in Verbindung mit ausreichender Festigkeit wird bei der Ausbildung des Kopfes vorteilhaft erzielt, wenn die Höhe des Kopfes das 0,3- bis 0,8-fache des Durchmessers des Kopfes beträgt.

Die Erfindung wird nachstehend anhand einer Zeichnung, die Ausführungsbeispiele wiedergibt, näher erläutert. Es zeigen:

Fig. 1 ein Befestigungselement im Längsschnitt;

Fig. 2 eine Setzanordnung mit dem Befestigungselement nach Fig. 1 in verkleinertem Massstab, zu Beginn des Setzvorganges;

Fig. 3 die Setzanordnung nach Fig. 2, am Ende des Setzvorganges;

Fig. 4 eine weitere Ausführungsform eines Befestigungselementen;

Fig. 5 eine weitere Auführungsform eines Befestigungselementes.

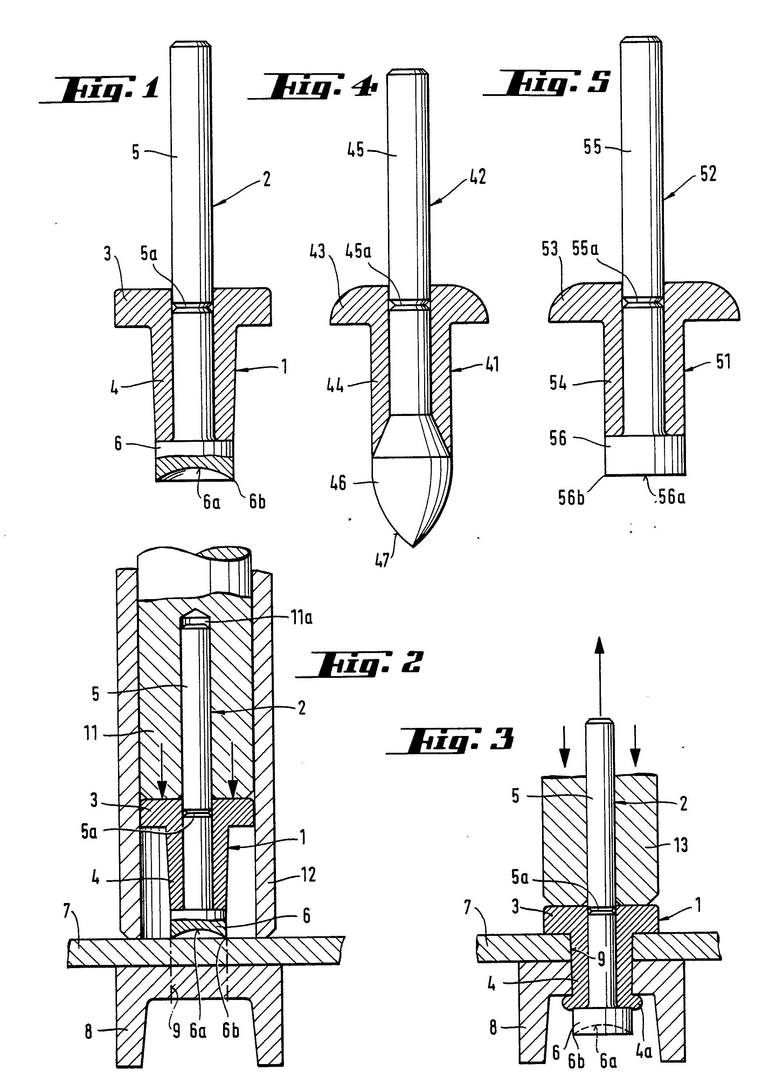

In Fig. 1 ist ein Befestigungselement gezeigt, das aus einer Stauchhülse 1 und einem Zugdorn 2 besteht.

Die Stauchhülse 1 weist am einen Ende einen Auflageflansch 3 auf, an den sich in Setzrichtung ein Hohlschaft 4 mit in Setzrichtung sich verjüngender, kegeliger Aussenkontur anschliesst.

Der Zugdorn 2 hat einen Schaft 5, der die Stauchhülse 1 konzentrisch und verschiebbar durchsetzt. Am setzrichtungsseitigen Ende des Schaftes 5 sitzt ein zylindrischer Kopf 6. Der Hohlschaft 4 stützt sich mit dem freien Ende am Kopf 6 axial ab. Die der Stauchhülse 1 abgewandte freie Stirnseite 6a des Kopfes 6 ist konkav ausgebildet, mit kalottenförmigem Boden, wodurch entlang der Umfangskontur des Kopfes 6 eine Ringschneide 6b gebildet ist.

Das Befestigungselement dient dem Verbinden eines flächenhaften Bauteiles 7 mit einem U-Träger 8. Hierzu ist eine das Bauteil 7 und den U-Träger 8 durchsetzende, in Fig. 2 strichpunktiert angedeutete Ausnehmung 9 zur Aufnahme des Befestigungselementes zu erstellen. Dies erfolgt nach dem Stanzverfahren durch die Ringschneide 6b des Befestigungselementes. Die für den Stanzvorgang erforderliche Kraft wird dabei gemäss den Pfeilen in Fig. 2 vom Kolben 11 eines pulverkraftbetriebenen Setzgerätes in die Stauchhülse 1 des mit dem Kopf 6 am Bauteil 7 aufstehenden Befestigungselementes eingeleitet. Der die Stauchhülse 1 entgegen der Setzrichtung überstehende Teil des Schaftes 5 ragt zum Führungszwecke in eine Zentralbohrung 11a des Kolbens 11. Aussenseitig sind die Stauchhülse 1 und der Kolben 11 in einem Mündungsrohr 12 des Setzgerätes geführt.

Nach erfolgtem Durchstanzen des Bauteiles 7 und des U-Trägers 8 in einem Zuge überragt der Hohlschaft 4 mit dem freien Ende den U-Träger 8 rückseitig. Mittels einer an sich bekannten Zugeinrichtung wird der Zugdorn 2 unter Angriff am Schaft 5 entgegen der Setzrichtung gezogen, wobei sich die Zugeinrichtung mit einem Widerlager 13 am Auflageflansch 3 der Stauchhülse 1 axial abstützt. Die dabei wirkenden Kräfte sind in Fig. 3 durch Pfeile angedeutet. Durch das Ziehen des Zugdorns 2 entgegen der Setzrichtung wird der Hohlschaft 4 im freien Endbereich vom Kopf 6 zur Bildung eines Schliesskopfes 4a, wie aus Fig. 3 ersichtlich, gestaucht und dadurch aufgeweitet. Der Hohlschaft 4 sitzt aufgrund der kegeligen, gegenüber dem Durchmesser des Kopfes 6 sich erweiternden Aussenkontur unter Klemmung in der Ausnehmung 9. Mit fortschreitendem Stauchvorgang nehmen die auf den Schaft 5 einwirkenden Zugkräfte zu, was bei Erreichen eines ausreichend grossen Schliesskopfes 4a das Abbrechen des die Stauchhülse 1 überragenden Abschnittes des Schaftes 5 an einer durch eine Umfangsrille 5a gebildeten Sollbruchstelle zur Folge hat.

Das Befestigungselement nach Fig. 4 besteht wiederum aus einer Stauchhülse 41 und einem Zugdorn 42. Die Stauchhülse 41 weist einen Auflageflansch 43 und einen Hohlschaft 44 auf. An einen Schaft 45 des Zugdornes 42 schliesst sich setzrichtungsseitig ein Kopf 46 mit ogivaler Spitze 47 an. Auch hier ist der Hohlschaft 44 mit einer Umfangsrille 45a zur Bildung einer Sollbruchstelle versehen. Die Spitze 47 kann bei Antrieb durch ein pulverkraftbetriebenes Setzgerät miteinander zu verbindende Bauteile durchstanzen.

Bei dem Befestigungselement nach Fig. 5 mit Stauchhülse 51 und Zugdorn 52 ist ebenso ein Auflageflansch 53 und ein Hohlschaft 54 der Stauchhülse 51 vorhanden. Ein sich an einen Schaft 55 des Zugdorns 52 in Setzrichtung anschliessender Kopf 56 weist eine plane freie Stirnseite 56a auf. Entlang der Umfangskontur des zylindrischen Kopfes 56 ist so eine Ringschneide 56b gebildet. Der Schaft 55 des Zugdorns 52 ist wiederum mit einer Umfangsrille 55a versehen. Der Setzvorgang mit diesem Befestigungselement kann wiederum unter Verwendung eines pulverkraftbetriebenen Setzgerätes erfolgen.

## Ansprüche

1. Verfahren zum Verbinden dünner Bauteile (7, 8) mittels eines Befestigungselementes, bestehend aus einer Stauchhülse (1, 41, 51) und einem diese durchragenden Zugdorn (2, 42, 52) mit die Stauchhülse (1, 41, 51) in Setzrichtung überragendem Kopf (6, 46, 56), wobei das Befestigungselement durch die Bauteile (7, 8) hindurchgetrieben und anschliessend die Stauchhülse (1, 41, 51) durch Zurückziehen des Zugdorns (2, 42, 52) an der Rückseite der Bauteile (7, 8) aufgeweitet wird, **dadurch gekennzeichnet**, dass das Hindurchtreiben des Befestigungselementes durch die Bauteile (7, 8) mittels eines pulverkraftbetriebenen Setzgerätes unter Hindurchstanzen des Kopfes (6, 46, 56) des Befestigungselementes durch die Bauteile (7, 8) erfolgt.

2. Befestigungselement zur Durchführung des Verfahrens nach Anspruch 1, dadurch gekennzeichnet, dass der Kopf (46) eine konvex ausgebildete freie Stirnseite aufweist.

3. Befestigungselement nach Anspruch 2, dadurch gekennzeichnet, dass die freie Stirnseite als ogivale Spitze (47) ausgebildet ist.

4. Befestigungselement zur Durchführung des Verfahrens nach Anspruch 1, dadurch gekennzeichnet, dass der Kopf (56) eine plan ausgebildete freie Stirnseite (56a) aufweist.

5. Befestigungselement zur Durchführung des Verfahrens nach Anspruch 1, dadurch gekennzeichnet, dass der Kopf (6) eine konkave ausgebildete freie Stirnseite (6a) aufweist.

6. Befestigungselement nach Anspruch 5, dadurch gekennzeichnet, dass die konkav ausgebildete freie Stirnseite (6a) einen kalottenförmigen Boden aufweist.

7. Befestigungselement nach Anspruch 6, dadurch gekennzeichnet, dass die grösste Tiefe des kalottenförmigen Bodens das 0,1- bis 0,3-fache des Durchmessers des Kopfes (6) beträgt.

8. Befestigungselement nach einem der Ansprüche 1 bis 7, dadurch gekennzeichnet, dass die Umfangskontur des Kopfes (6, 46, 56) wenigstens teilweise zylindrisch ausgebildet ist.

9. Befestigungselement nach einem der Ansprüche 1 bis 8, dadurch gekennzeichnet, dass die Höhe des Kopfes (6, 56) das 0,3- bis 0,8-fache des Durchmessers des Kopfes (6, 46, 56) beträgt.

Fig. 1

Fig. 4

Fig. 5

Fig. 2

Fig. 3